# EUROPÄISCHE PATENTSCHRIFT

(11) **EP 0 473 917 B1**
(45) Veröffentlichungstag und Bekanntmachung des Hinweises auf die Patenterteilung: **19.04.1995**
(21) Anmeldenummer: 91111998.0
(22) Anmeldetag: 18.07.1991
(51) Int. Cl.: G05D 16/10, G05D 16/06

(54) **Druckregelventil**
Pressure control valve
Soupape de réglage de pression

(30) Priorität: 30.08.1990 DE 4027455
(43) Veröffentlichungstag der Anmeldung: 11.03.1992
(73) Patentinhaber: ROBERT BOSCH GMBH, 70442 Stuttgart (DE)
(72) Erfinder: Witowski, Edgar, Dipl. Ing. (FH), W-7255 Rutesheim (DE)

(56) Entgegenhaltungen:
- DE-B- 1 176 437
- FR-A- 1 569 851
- FR-A- 2 247 935
- GB-A- 2 027 229
- US-A- 2 599 577

## Beschreibung

Die Erfindung geht aus von einem Druckregelventil nach der Gattung des Hauptanspruchs. Derartige bekannte Druckregelventile haben die Aufgabe, einen Eingangsdruck auf einen vorgegeben, möglichst konstanten Sekundärdruck einzuregeln. Bei diesen Druckregelventilen wird ein Regelventilkörper durch einen aus einem federkraftbelasteten Regelkolben oder einer Regelmembran gebildeten Stelltrieb in Abhängigkeit von den ausgangsseitigen Druckverhältnissen gesteuert.

Um bei diesen Druckregelventilen den Ausgangsdruck unabhängig von Schwankungen des Eingangsdruckes konstant zu halten, ist bekannt, die in Öffnungs- und Schließrichtung wirkenden Druckflächen des Regelventilkörpers gleich groß auszubilden. Ist bei derartigen Druckregelventilen kein Verbraucher eingeschaltet, d. h. der Durchfluß ist Null, sind die Druckkräfte und die Federkräfte auf den Regelkolben oder die Regelmembran im Gleichgewicht, so daß der Regelventilkörper an seinen Ventilsitz gedrückt wird. Wird in dieser Arbeitsstellung die Eingangsdruckseite entlüftet, öffnet das Regelventil nicht, so daß die Ausgangsdruckseite nicht entlüftet wird.

Um ein selbsttätiges Entlüften der Ausgangsdruckseite in diesem Falle zu gewährleisten, ist es ebenfalls bekannt, die in Öffnungsrichtung wirkende Druckfläche des Regelventilkörpers größer auszubilden, so daß auf diesen eine Kraft in Öffnungsrichtung wirkt. Das fuhrt dazu, daß bei entlüfteter Eingangsdruckseite auch die Ausgangsdruckseite entlüftet wird. Derartige Druckregelventile haben den Nachteil, daß sich durch die unterschiedlich großen Druckflächen des Regelventilkörpers Druckschwankungen auf der Eingangsdruckseite des Druckregelventils auch auf dessen Ausgangsdruckseite übertragen.

Um die ausgangsseitigen Druckschwankungen zu vermeiden und gleichzeitig ein selbsttätiges Entlüften der Ausgangsdruckseite zu ermöglichen, ist es weiterhin bekannt, die Druckflächen des Regelventilkörpers gleich groß auszubilden und gleichzeitig ein herkömmliches Rückschlagventil parallel zu schalten. Dieses öffnet bei verschlossenem Regelventilsitz und entlüfteter Eingangsdruckseite und entlüftet so die Ausgangsdruckseite. Ein solches Rückschlagventil kann entweder parallel zum Druckregelventil angeordnet sein oder in dieses integriert werden. Ein solches Druckregelventil baut aufwendig und erfordert eine größere Zahl von Bauelementen.

### Vorteile der Erfindung

Das erfindungsgemäße Druckregelventil mit den kennzeichnenden Merkmalen des Hauptanspruchs hat demgegenüber den Vorteil, daß bei einfachem Aufbau ein selbsttätiges Entlüften der Ausgangsdruckseite ermöglicht wird und gleichzeitig Druckschwankungen auf der Eingangsdruckseite nicht durch unterschiedlich große Druckflächen am Regelventilkörper auf die Ausgangsdruckseite übertragen werden.

### Zeichnung

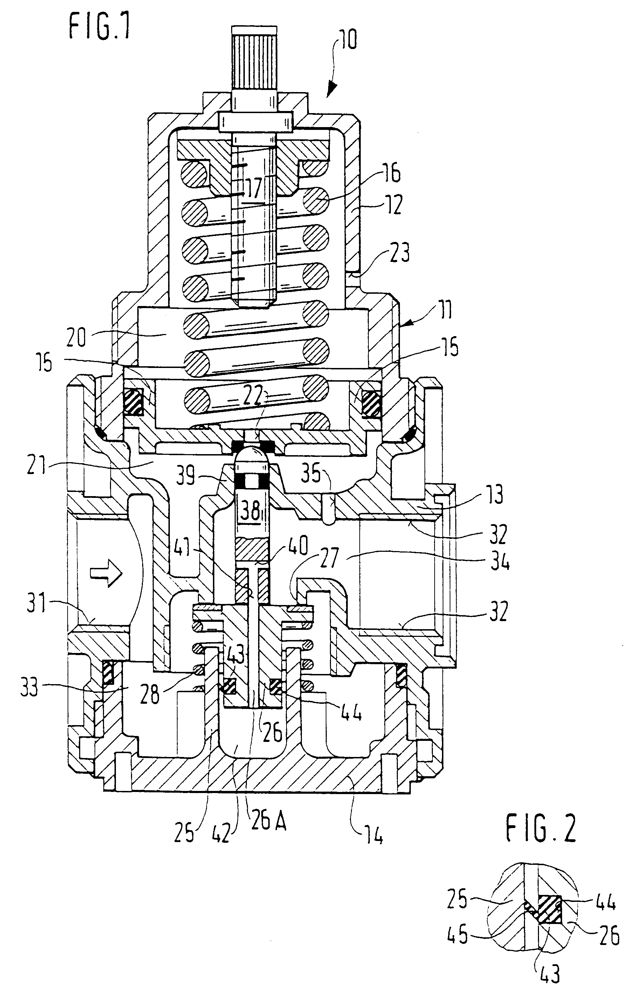

Ein Ausführungsbeispiel der Erfindung ist in der nachfolgenden Beschreibung und Zeichnung näher erläutert. Letztere zeigt in Figur 1 einen Längsschnitt durch ein Druckregelventil, in Figur 2 einen Schnitt durch einen Dichtring als Detailansicht nach Figur 1.

### Beschreibung des Ausführungsbeispiels

In Figur 1 ist mit 10 ein Druckregler bezeichnet, der ein Gehäuse 11 besitzt, das aus drei Teilen zusammengesetzt ist, und zwar aus einem Oberteil 12, einem Mittelteil 13 und einem Bodenteil 14. In dem Oberteil ist ein Regelkolben 15 eingebaut, auf den einseitig eine Regelfeder 16 einwirkt, deren Vorspannung durch eine Stellschraube 17 verändert werden kann. Durch den Regelkolben wird einerseits ein Raum 20 im Oberteil und andererseits ein Raum 21 im Mittelteil gebildet. Durch eine Zentrumsbohrung 22 im Regelkolben sind die Räume 20, 21 miteinander verbunden, und der Raum 20 ist über eine Bohrung 23 mit der Atmosphäre verbunden.

In einem hülsenförmigen Fortsatz 25 des Bodenteils ist ein Regelventilkörper 26 geführt, der mit einem ringförmigen Ventilsitz 27 im Mittelteil zusammmenwirkt. Über eine Feder 28, die sich im Bodenteil abstützt, wird der Regelventilkörper mit seinem flanschartigen Rand gegen den Ventilsitz 27 gedrückt.

Im Mittelteil 13 sind einander gegenüberliegend ein Eingangsdruckanschluß 31 und ein Ausgangsdruckanschluß 32 ausgebildet. Der Eingangsdruckanschluß steht mit einem im Bodenteil und im Mittelteil unterhalb des Ventilsitzes 27 ausgebildeten Druckraum 33 in Verbindung. Der Ausgangsdruckanschluß 32 führt zu einem Druckraum 34 oberhalb des Ventilsitzes. Der Druckraum 34 ist über eine Bohrung 35 mit dem Raum 21 verbunden.

Der Regelventilkörper 26 wird über einen Stößel 38 betätigt, der mit dem Regelkolben 15 in Wirkverbindung steht und in einer am Mittelteil 13 zwischen Raum 21 und Raum 34 befindlichen Führungshülse 39 dicht gleitend geführt ist. Dieser Stößel verschließt die Zentrumsbohrung 22 im Regelkolben. Der Stößel 38 ist im Bereich des Raumes 34 von einer Querbohrung 40 durchdrungen, in die eine Sackbohrung 41 mündet, die vom Regelventilkörper ausgeht. Der Regelventilkörper ist von einer mittigen Längsbohrung 26A durchdrungen, die achsgleich zur Sackbohrung 41 verläuft und in diese mündet. Durch die Bohrung 40 und die Sackbohrung 41 sowie die Längsbohrung 26A sind der Raum 34 und der unterhalb des Regelventilkörpers befindliche Raum 42 in der Hülse 25 miteinander verbunden. Der Regelventilkörper ist so ausgebildet, daß seine stirnseitigen, druckbeaufschlagten Ringflächen gleich groß sind.

Der Raum 42 ist durch einen Dichtring 43, der in eine Ringnut 44 im Regelventilkörper eingelegt ist, gegen den Raum 33 abgedichtet. Dieser Dichtring ist, wie in Figur 2 dargestellt, an seinem Außenumfang mit einer umlaufenden, elastischen Rückschlaglippe 45 versehen, die an der Wandung der Hülse 25 anliegt. Diese Rückschlaglippe ist so ausgebildet, daß sie bei einem Druckgefälle von Druckraum 33 zu Raum 42 dicht an der Wandung der Hülse anliegt und so die Räume 33, 42 gegeneinander abdichtet. Bei einem Druckgefälle in entgesetzter Richtung gibt die Rückschlaglippe nach, so daß die Räume 33, 42 miteinander verbunden sind.

Wenn sich zunächst das Druckregelventil noch nicht im Betriebszustand befindet, d. h. wenn die Druckmittelzufuhr unterbrochen ist, drückt die auf einen bestimmten Wert vorgespannte Feder 16 den Regelkolben nach unten. Über den Stößel 38 wird der Regelventilkörper 26 gegen die Wirkung der Feder 28 ebenfalls nach unten gedrückt, so daß der Ventilsitz 27 geöffnet ist.

Wird dem Eingangsdruckanschluß 31 nunmehr Druckluft zugeführt, gelangt diese über den Druckraum 33 am geöffneten Ventilsitz 27 vorbei in den Druckraum 34, der mit dem Ausgangsdruckanschluß 32 verbunden ist. Über die Bohrung 40, die Sackbohrung 41 und die Längsbohrung 26A besteht eine Verbindung zum Raum 42, so daß der Regelventilkörper 26 druckausgeglichen ist. Über die Bohrung 35 und den Raum 21 wirkt der im Raum 34 herrschende Ausgangsdruck auf den Regelkolben 15 und drückt diesen gegen die Kraft der Regelfeder 16 nach oben, bis die Druckkräfte und die Federkräfte ausgeglichen sind. Gleichzeitig folgen der Stößel 38 und der Regelventilkörper 26 der Aufwärtsbewegung. Bei ausgeglichenen Kräften am Regelkolben wird der Ventilsitz 27 durch den Regelventilkörper geschlossen. Sinkt nun durch Verbrauch der Ausgangsdruck, bewegt sich der Regelkolben aufgrund der wieder unausgeglichenen Regelkräfte nach unten, so daß der Ventilsitz 27 wieder geöffnet wird.

Übersteigt der Ausgangsdruck den vorbestimmten Wert, wird der Regelkolben 15 weiter nach oben gedrückt, so daß der Stößel aufgrund des am Ventilsitz anliegenden Regelventilkörpers 26 die Zentrumsbohrung 22 nicht mehr verschließen kann. Dadurch kann Druckluft vom Raum 21 in den Raum 20 gelangen, der über die Bohrung 23 mit der Atmosphäre verbunden ist. Der Ausgangsdruck baut sich dadurch auf den eingestellten Wert ab, bei dem der Regelkolben 15 wieder an den Stößel zur Anlage kommt und die Zentrumsbohrung verschließt.

Wird bei konstantem Ausgangsdruck der Verbraucher abgeschaltet, liegt der Regelventilkörper 26 am Ventilsitz 27 an, so daß dieser Druck gehalten wird. Sinkt in diesem Fall der Eingangsdruck, z. B. durch Entlüften der Eingangsdruckseite, entsteht ein Druckgefälle zwischen Raum 33 und Raum 42.

Übersteigt die Druckdifferenz einen Wert, der von den elastischen Eigenschaften der Rückschlaglippe 45 abhängt, kann Druckluft vom Raum 42 an dieser vorbei zum Raum 33 strömen. Dadurch sinkt der ausgangsseitige Druck, der auch im Raum 21 herrscht. Daraus ist zu erkennen, daß der Dichtring 43 die Funktion eines Rückschlagventils hat. Die auf den Regelkolben wirkenden Kräfte sind nicht mehr im Gleichgewicht, so daß dieser nach unten gedrückt wird und damit über den Stößel und den Regelventilkörper den Ventilsitz 27 öffnet. Über den geöffneten Ventilsitz werden nun die ausgangsseitigen Druckräume entlüftet.

## Patentansprüche

1. Druckregelventil mit einem durch eine vorspannbare Regelfeder (16) belasteten Regelorgan, das auf einen zwischen der Eingangsdruckseite (31, 33) und der Ausgangsdruckseite (34, 32) angeordneten Regelventilkörper (26) einwirkt, und mit einer Druckmittelverbindung (26A, 40, 41), welche den ausgangsseitigen Druckraum (34) mit einem Ausgleichsdruckraum (42) verbindet, der durch einen am Außenumfang des Regelventilkörpers angeordneten Dichtring (43) gegen den Eingangsdruckraum (33) abgedichtet ist sowie mit einem Rückschlagorgan, das zwischen Eingangs- und Ausgangsdruckseite angeordnet ist, dadurch gekennzeichnet, daß das Rückschlagorgan durch eine elastische Dichtlippe (45) am Dichtring (43) gebildet ist, und daß die Druckmittelverbindung (26A, 40 41) teilweise als Bohrung (26A) im Regelventilkörper ausgebildet ist und teilweise als Querbohrung (40) und Sackbohrung (41) in einem Stößel, welcher zwischen Regelventilkörper und Regelkolben angeordnet ist.

2. Druckregelventil nach Anspruch 1, dadurch gekennzeichnet, daß das Regelorgan aus einem etwa topfförmig ausgebildeten Regelkolben (15) besteht.

3. Druckregelventil nach Anspruch 1, dadurch gekennzeichnet, daß das Regelorgan aus einer Regelmembran besteht.

## Claims

1. Pressure control valve with a control member which is loaded by a preloadable control spring (16) and acts on a control valve element (26) arranged between the inlet pressure side (31, 33) and the outlet pressure side (34, 32), and with a pressure-medium connection (26A, 40, 41) which connects the output-side pressure space (34) to a balance pressure space (42) which is sealed off from the inlet pressure space (33) by a sealing ring (43) arranged on the outer circumference of the control valve element, and with a non-return member which is arranged between the inlet- and the outlet-pressure side, characterized in that the non-return member is formed by an elastic sealing lip (45) on the sealing ring (43) and in that the pressure-medium connection (26A, 40, 41) is in part designed as a bore (26A) in the control valve element and in part as a transverse bore (40) and blind bore (41) in a tappet which is arranged between the control valve element and the control piston.

2. Pressure control valve according to Claim 1, characterized in that the control member comprises a control piston (15) of approximately cup-shaped design.

3. Pressure control valve according to Claim 1, characterized in that the control member comprises a control diaphragm.

## Revendications

1. Soupape de réglage de pression comportant un organe de réglage chargé par un ressort de réglage (16) précontraint, cet organe agissant sur un corps de soupape de réglage (26) prévu entre le côté de la pression d'entrée (31, 33) et le côté de la pression de sortie (34, 32), et une liaison de fluide sous pression (26A, 40, 41) reliant la chambre de pression (34) en sortie à une chambre de pression d'équilibrage (42) fermée de manière étanche par rapport à la chambre de pression d'entrée (33) par un anneau d'étanchéité (43) prévu à la périphérie du corps de soupape de réglage, et un organe antiretour prévu entre le côté de la pression d'entrée et celui de la pression de sortie, soupape caractérisée en ce que l'organe antiretour est formé par une lèvre d'étanchéité élastique (45) sur l'anneau d'étanchéité (43) et la liaison de fluide sous pression (26A, 40, 41) est en partie constituée par un perçage (26A) dans le corps de soupape de réglage et en partie comme perçage transversal (40) et comme perçage borgne (41) dans un poussoir prévu entre le corps de soupape de réglage et le piston de réglage.

2. Soupape de réglage de pression selon la revendication 1, caractérisée en ce que l'organe de réglage est un piston de réglage (15) sensiblement en forme de pot.

3. Soupape de réglage de pression selon la revendication 1, caractérisée en ce que l'organe de réglage est une membrane de réglage.
